Europäisches Patentamt

European Patent Office

Office européen des brevets

(11) Numéro de publication : **0 156 711**
**B1**

# (12) FASCICULE DE BREVET EUROPÉEN

(45) Date de publication du fascicule du brevet :
**11.11.87**

(21) Numéro de dépôt : **85400440.5**

(22) Date de dépôt : **07.03.85**

(51) Int. Cl.⁴ : **B 21 C 37/06, F 16 L 9/18**

(54) **Tube soudé à double paroi et son procédé de fabrication.**

(30) Priorité : **16.03.84 FR 8404134**

(43) Date de publication de la demande :
**02.10.85 Bulletin 85/40**

(45) Mention de la délivrance du brevet :
**11.11.87 Bulletin 87/46**

(84) Etats contractants désignés :
**AT BE CH DE GB IT LI LU NL SE**

(56) Documents cités :
**FR-A- 868 704**
**GB-A- 1 038 035**
**US-A- 2 274 519**
**US-A- 3 327 383**
**US-A- 3 434 503**

(73) Titulaire : **UGINE GUEUGNON S.A.**
**F-71130 Gueugnon (FR)**

(72) Inventeur : **Baillet, Raymond**
**rue des Bruyères**
**F-71130 Gueugnon (FR)**

(74) Mandataire : **Moncheny, Michel et al**
**c/o Cabinet Lavoix 2 Place d'Estienne d'Orves**
**F-75441 Paris Cedex 09 (FR)**

## Description

La présente invention concerne les tubes à double paroi ainsi que leurs procédés de fabrication.

On sait qu'il est intéressant dans de nombreuses applications, par exemple dans la construction automobile, d'utiliser des tubes à double paroi entre lesquelles, peut éventuellement être disposé un matériau de remplissage en contact continu ou discontinu avec les deux parois entre lesquelles il est disposé. La présence de ces deux parois et d'un intervalle entre elles, rempli ou non, permet d'obtenir des caractéristiques améliorées d'isolation, que ce soit sur le plan thermique ou sur le plan phonique. De tels tubes peuvent par exemple être utilisés pour constituer des tubulures d'échappement de véhicules automobiles.

Un procédé de fabrication de tels tubes peut consister à former un ensemble composite obtenu en superposant deux feuillards métalliques maintenus à une certaine distance l'un de l'autre au moyen d'entretoises venues de matière avec l'un et/ou l'autre de ces deux feuillards ou rapportées, ou bien séparés par un matériau intercalaire continu ou discontinu, pouvant être constitué par un grillage ou un treillis métallique ou non, ou bien par un matériau sous forme de mousse, de poudre ou autre. Cet ensemble composite est ensuite roulé pour former un tube et les deux bords adjacents sont assemblés par soudure. Cependant, un inconvénient sérieux de ce procédé réside dans le fait que dans la zone de la soudure, les deux bords en regard du matériau composite sont constitués par les bords vifs des deux feuillards constituant les parois interne et externe du tube, de sorte que la soudure entre ces deux parties en regard risque d'être de mauvaise qualité et que la solidité et l'étanchéité du tube peuvent s'en trouver gravement affectées. Ceci est dû à des défauts inévitables dans la géométrie des bords en regard et à un défaut d'homogénéité qui se trouve encore accru si un matériau fusible se trouve disposé entre les deux feuillards et se mélange au bain de fusion pendant l'opération de soudage.

Dans le US-A-3.327.383, on a décrit un procédé de fabrication d'un tube plaqué consistant à enrouler simultanément deux tôles destinées à constituer la couche interne et la couche externe du tube. Les bords de la tôle externe sont ensuite repliés vers l'intérieur sur les bords adjacents de la tôle interne et soudés ensemble. Un tel procédé permet de fabriquer un tube plaqué c'est-à-dire un tube dont la paroi comporte deux couches superposées et non pas un tube à double paroi dont les deux parois sont séparées et isolées. En outre, la soudure est effectuée dans une zone de la tôle externe comportant des arêtes vives.

Dans le US-A-3.434.503, on a décrit également un procédé de fabrication d'un tube plaqué qui est revêtu intérieurement et extérieurement d'un matériau résistant à la corrosion. Une tôle plaquée sur ses deux faces par un matériau résistant à la corrosion subit des opérations successives de pliage et de laminage puis est enroulée et soudée suivant un processus complexe visant à l'obtention d'un tube protégé contre la corrosion sur toute sa surface. La soudure effectue la jonction entre deux plis continus de la tôle plaquée. Ce processus de fabrication de grande complexité ne vise pas l'obtention de tubes à deux parois isolées et séparées par un espace radial mais celle de tubes dont la paroi est protégée par une couche externe de matériau résistant à la corrosion.

Le but de l'invention est donc de réaliser un tube soudé à double paroi comportant une paroi externe et une paroi interne séparées et isolées l'une de l'autre par un espace d'isolation et de proposer un procédé de fabrication grâce auxquels les inconvénients mentionnés plus haut sont éliminés.

A cet effet, suivant un premier mode de réalisation de l'invention, la paroi externe et la paroi interne du tube sont constituées par un seul feuillard replié sur lui-même suivant deux plis ayant la forme d'un U ne présentant aucune solution de continuité et enroulé pour constituer le tube à double paroi de manière que les deux plis soient en coïncidence l'un avec l'autre et joints par la soudure du tube.

Suivant un second mode de réalisation de l'invention, la paroi externe et la paroi interne du tube sont constituées par une enveloppe tubulaire aplatie de façon à former deux plis ayant la forme d'un U ne présentant aucune solution de continuité et enroulée pour constituer le tube à double paroi de manière que les deux plis soient en coïncidence l'un avec l'autre et joints par la soudure du tube.

L'invention a également pour objet un procédé de fabrication d'un tel tube, où l'on réalise en pliant un feuillard ou en aplatissant un tube une ébauche à double paroi dont deux bords libres, opposés, parallèles sont constitués, respectivement, par un pli du matériau délimitant lesdites parois, on donne à cette ébauche la forme d'un tube et l'on assemble par soudure les deux bords libres, parallèles, adjacents.

Suivant d'autres caractéristiques :

l'ébauche est obtenue par pliage d'un feuillard en rabattant à 180° deux parties latérales opposées de ce feuillard ;

les deux parties latérales rabattues sont constituées d'un matériau différent de celui qui constitue la partie centrale du feuillard.

L'invention va être décrite plus en détail ci-dessous en se référant aux dessins annexés, donnés uniquement à titre d'exemples et sur lesquels :

la Figure 1 est une vue en coupe d'un feuillard à un stade initial de la fabrication d'un tube ;

la Figure 2 est une vue en coupe d'une ébauche à un stade intermédiaire de la fabrication ;

la Figure 3 est une vue en coupe transversale d'un tube avant soudage ;

la Figure 4 est une vue en perspective du tube après l'opération de soudage ;

les Figures 5, 6 et 7 sont des vues analogues à celles des Figures 1, 2 et 3, pour réaliser un tube à double paroi séparées par un grillage ou autre matériau intercalaire ;

les Figures 8 et 9 sont deux vues en coupe transversale destinées à illustrer deux variantes ;

les Figures 10, 11 et 12 sont respectivement deux vues en coupe et une vue en perspective représentant une autre variante.

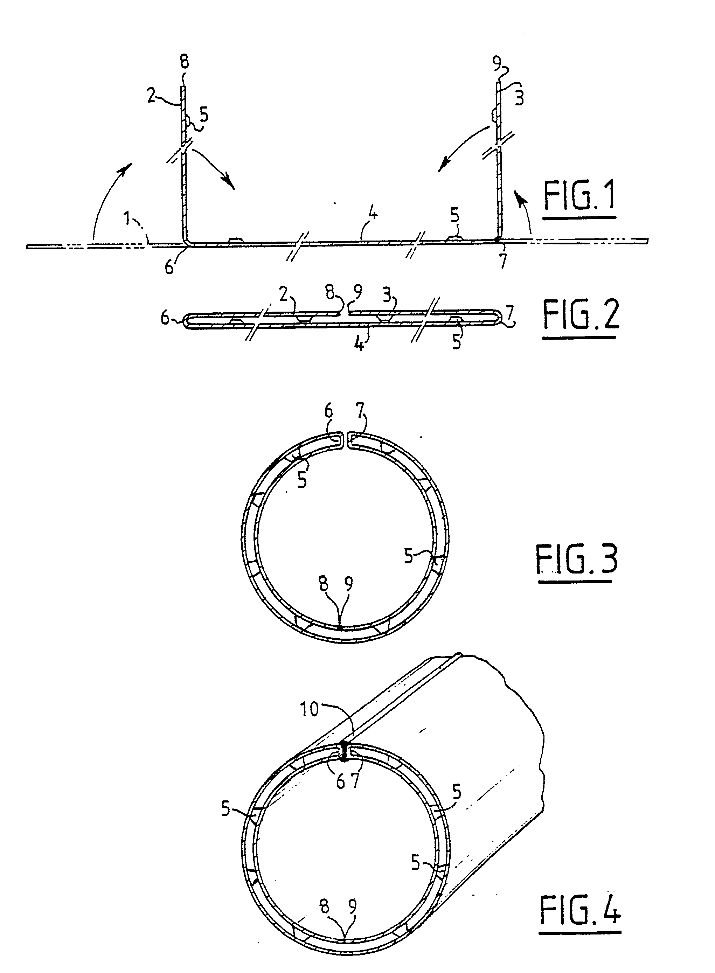

On voit au dessin un feuillard métallique 1, par exemple en acier ou tout autre métal convenable, dont deux parties latérales 2, 3 sont rabattues à partir d'une position représentée en trait mixte, jusqu'à prendre la position de la Figure 2, en passant par la position de la Figure 1. La largeur des ailes 2, 3 est à peu près égale ou, de préférence, légèrement inférieure à la moitié de la largeur de la partie centrale 4 du feuillard 1.

De préférence, ce feuillard comporte des plots 5 légèrement en saillie qui sont destinés à déterminer l'écartement entre les deux parois du tube fini.

Il est à noter que les deux bords longitudinaux opposés 6, 7 de l'ébauche représentée à la Figure 2 sont constitués par la surface extérieure d'un pli et ne présentent donc pas de solutions de continuité.

Sur la Figure 3, l'ébauche de la Figure 2 a été roulée de façon à obtenir un tube, les deux bords libres 8, 9 du feuillard initial étant disposés adjacents. De plus, avant roulage, les deux plis 6, 7 sont soumis à une opération de râclage ou de galetage, pour leur donner une forme plus plane.

A la Figure 4, on a représenté la soudure 10 réalisée entre les deux plis 6, 7, pour obtenir le tube à double paroi. Cette soudure peut être réalisée par tout procédé convenable, par exemple avec électrode sous gaz inerte, par chauffage par resistance ou radiofréquence.

Il est à noter que dans la phase représentée à la Figure 2, les deux bords libres 8, 9 des deux parties rabattues qui se trouvent assez proches l'un de l'autre peuvent si on le désire être reliés l'un à l'autre par exemple par soudure.

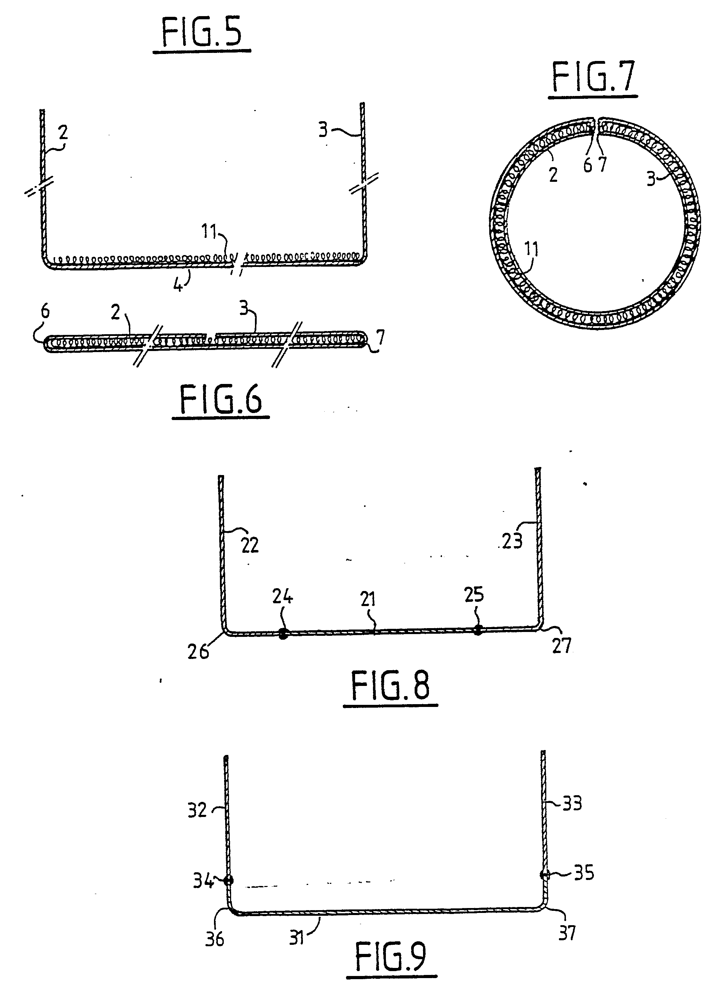

Dans le mode de réalisation des Figures 5 à 7, le même procédé est mis en œuvre, à cette différence près que le feuillard 1 ne comporte pas de plots et que l'on dispose sur la partie centrale 4 de l'ébauche un élément intercalaire 11 qui peut être constitué par un grillage ou tout autre matériau convenable, de préférence soudable, sur lequel sont rabattues les deux parties latérales 2, 3 du feuillard. De préférence, le grillage est mis en place alors que les ailes 2, 3 sont à peu près à 90°, comme représenté sur la Figure 5.

La suite du procédé est identique à ce qui été décrit précédemment, pour constituer tout d'abord une ébauche plane (Figure 6) dont les deux bords longitudinaux 6, 7 sont constitués par les surfaces extérieures de deux plis, cette ébauche étant ensuite roulée pour obtenir un tube comme représenté à la Figure 7, terminé ensuite par une opération de soudage.

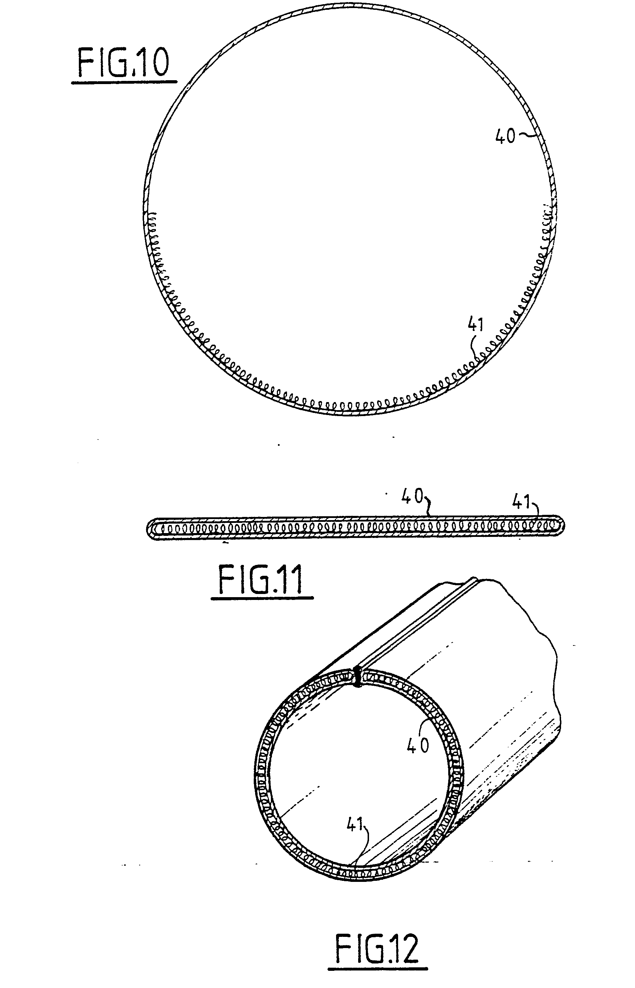

Sur les Figures 8 et 9, ont été représentées deux légères variantes de ce procédé de fabrication selon lesquelles l'ébauche à partir de laquelle va être réalisé le tube n'est pas réalisée dans le même feuillard, mais à partir de deux matériaux différents ou simplement d'épaisseurs différentes.

Dans le cas de la Figure 8, trois éléments ou feuillards 21, 22, 23 sont assemblés le long de deux lignes de soudure 24, 25 qui sont prévues sur la base du U, à une distance relativement faible des deux plis 25, 27 autour desquels vont être rabattues les parties latérales 22, 23.

Dans le cas de la Figure 9, les deux lignes de soudure 34, 35 sont prévues dans les ailes 32, 33 du U, et également à faible distance des plis 36, 37 autour desquels les deux parties latérales vont être rabattues sur la partie centrale 31.

Cette disposition prévue aux Figures 8 et 9 permet de réaliser par le procédé déjà décrit ci-dessus un tube dont les parois interne et externe peuvent avoir des caractéristiques différentes, la paroi interne pouvant par exemple être réalisée en acier inoxydable, suivant la nature du fluide devant circuler dans le tube, tandis que la paroi externe peut être constituée d'un acier de moins bonne qualité.

Dans le mode de réalisation des Figures 10 à 12, on part d'un tube métallique 40 de forme ronde ou déjà partiellement aplati et, pour constituer une ébauche plane, il suffit d'aplatir ou finir d'aplatir ce tube (Figure 11) pour ensuite le former et le souder comme représenté à la Figure 12. De préférence, on dispose à l'intérieur du tube initial un matériau de garnissage 41 dont la largeur est choisie à peu près égale ou légèrement inférieure à la moitié de la longueur de la circonférence du tube (Figure 10) de façon à pouvoir réaliser un tube composite analogue à celui représenté à la Figure 7.

Dans ces diverses variantes, le procédé suivant l'invention permet de réaliser un tube dont la zone de soudure est d'excellente qualité. En effet, dans tous les cas, la soudure est réalisée dans une zone où le matériau constituant les parois interne et externe du tube forme un pli et ne présente donc pas de solution de continuité ni de défaut d'homogénéité.

Les caractéristiques d'étanchéité et de tenue du tube s'en trouvent très sensiblement améliorées.

Bien entendu, le procédé de l'invention peut être appliqué avec une grande variété de matériaux intercalaires ou de remplissage entre ces parois. De même, la composition du matériau constituant le tube lui-même peut faire l'objet de très nombreuses variantes.

## Revendications

1. Tube soudé à double paroi comportant une paroi externe et une paroi interne séparées et isolées l'une de l'autre par un espace d'isolation, constituées par un seul feuillard (1) replié sur lui-même suivant deux plis (6, 7) ayant la forme d'un U ne présentant aucune solution de continuité et enroulé pour constituer le tube à double paroi de manière que les deux plis (6, 7) soient en coïncidence l'un avec l'autre et joints par la soudure (10) du tube.

2. Tube soudé à double paroi comportant une paroi externe et une paroi interne séparées et isolées l'une de l'autre par un espace d'isolation, constituées par une enveloppe tubulaire (40) à simple paroi aplatie de façon à former deux plis ayant la forme d'un U ne présentant aucune solution de continuité et enroulée pour constituer le tube à double paroi de manière que les deux plis soient en coïncidence l'un avec l'autre et joints par la soudure du tube.

3. Tube suivant la revendication 1 caractérisé par le fait que les parois intérieure et extérieure du tube sont réalisées en des matériaux différents, sauf au voisinage immédiat des plis (26, 27, 36, 37) situés dans la zone de soudure du tube.

4. Tube suivant l'une quelconque des revendications 1, 2 et 3, caractérisé par le fait qu'un matériau intercalaire (11, 41) est disposé dans l'espace entre les deux parois du tube.

5. Procédé de fabrication d'un tube soudé suivant la revendication 1, où l'on réalise, par pliage d'un feuillard (1) en rabattant à 180° deux parties latérales (2, 3) opposées de ce feuillard, une ébauche à double paroi dont deux bords libres, opposés, parallèles sont constitués, respectivement, par un pli (6, 7) ayant la forme d'un U du matériau comportant lesdites parois, on donne à cette ébauche la forme d'un tube et l'on assemble par soudure les deux bords libres, parallèles, adjacents (6, 7).

6. Procédé de fabrication suivant la revendication 5, caractérisé en ce qu'une fois rabattues, lesdites parties latérales (2, 3) sont séparées par un jeu qui est rattrapé lors de l'opération de mise en forme du tube.

7. Procédé de fabrication suivant la revendication 5, caractérisé en ce que les deux parties latérales rabattues (22, 23 ; 32, 33) sont constituées d'un matériau différent de celui qui constitue la partie centrale (21 ; 31) du feuillard.

8. Procédé de fabrication suivant la revendication 5, caractérisé en ce qu'on dispose dans l'ébauche, avant mise en forme du tube, un matériau intercalaire (11 ; 41).

9. Procédé de fabrication suivant la revendication 8, caractérisé en ce que le matériau intercalaire (11) est mis en place alors que les parties latérales (2, 3) forment un angle voisin de 90° avec la partie centrale (4) du feuillard.

10. Procédé de fabrication d'un tube soudé suivant la revendication 2, où l'on réalise, en aplatissant un tube (40) à simple paroi, une ébauche à double paroi dont deux bords libres, opposés, parallèles sont constitués, respectivement, par un pli ayant la forme d'un U du matériau constituant lesdites parois, on donne à cette ébauche la forme d'un tube et l'on assemble par soudure les deux bords libres, parallèles, adjacents.

11. Procédé de fabrication suivant la revendication 10, caractérisé en ce que avant d'aplatir le tube (40), on place dans ce dernier un élément intercalaire (41) dont la largeur est à peu près égale à la moitié de la longueur de la circonférence du tube initial (40).

12. Procédé de fabrication selon l'une quelconque des revendications 5 à 11, caractérisé en ce que les surfaces extérieures des plis (6, 7) sont dressées par exemple par râclage ou galetage avant l'opération de soudage.

**Claims**

1. A double-wall welded tube having an outer wall and an inner wall separated and isolated from each other by an insulating gap, said walls being made of a single metal sheet (1) folded over along two continuous U-shaped folds (6, 7), and shaped into said double-wall tube so that the two folds are in coincidence and connected by the weld of the tube.

2. A double-wall welded tube having an outer wall and an inner wall separated and isolated from each other by an insulating gap, made of a single wall tubular envelope (40) flattened in order to provide two continuous U-shaped folds, and shaped into the double-wall tube so that the two folds are in coincidence and connected by the weld of the tube.

3. A tube according to claim 1, wherein the inner and outer walls are made from different materials, except in the immediate vicinity of the folds (26, 27 ; 36, 37) located in said weld region of the tube.

4. A tube according to any one of the claims 1, 2 and 3, wherein an intercalated material (11 ; 41) is provided in the gap between the two walls of the tube.

5. A method for producing a welded tube according to claim 1, comprising obtaining a double-wall blank by folding a metal sheet (1) in such manner as to fold over two opposed lateral portions (2, 3) of said sheet, said double-wall blank having opposed parallel free edges which are respectively formed by a U-shaped fold (6, 7) of the material defining said walls, imparting to said blank the shape of a tube and assembling the two adjacent parallel free edges (6, 7) by welding.

6. A method according to claim 5, wherein, when said lateral portions (2, 3) have been folded over, they are spaced apart by a gap which is taken up when forming the tube from said blank.

7. A method according to claim 5, wherein the two lateral formed-over portions (22, 23 ; 32, 33) are constituted by an intercalated material which is different from the material constituting the central portion (21 ; 31) of the sheet.

8. A method according to claim 5, further comprising interposing a material (11 ; 41) between the two walls of the blank before shaping it into a tube.

9. A method according to claim 8, wherein said intercalated material (11) is brought into place when said two lateral portions (2, 3) make an angle of around 90° with the central portion (4) of the sheet.

10. A method for producing a welded tube according to claim 2, comprising obtaining a double-wall blank by flattening a single-wall tube (40), said double-wall blank having two opposed parallel free edges which are respectively formed by a U-shaped fold of the material defining said walls, imparting to said blank the shape of a tube and assembling the two adjacent parallel free edges by welding.

11. A method according to claim 10, comprising, before flattening the tube (40) placing in the latter an intercalated element (41) whose width is roughly equal to one half of the length of the circumference of the initial tube (40).

12. A method according to any one of the claims 5 to 11, wherein the outer surfaces of the folds (6, 7) are prepared for example by scraping or truing up before the welding operation.

## Patentansprüche

1. Geschweißtes doppelwandiges Rohr, welches eine Außenund eine Innenwand aufweist, die voneinander durch einen Isolierungsraum getrennt und isoliert sind und aus einem einzigen Band (1) gebildet sind, welches längs zweier keine Unterbrechung des Zusammenhangs aufweisender U-förmiger Falze (8, 7) auf sich selbst umgebogen und zur Bildung des doppelwandigen Rohres so eingerollt ist, daß die beiden Falze (6, 7) miteinander zusammentreffen und durch die Rohrschweißnaht (10) verbunden sind.

2. Geschweißtes doppelwandiges Rohr, welches eine Außenund eine Innenwand aufweist, die voneinander durch einen Isolierungsraum getrennt und isoliert sind und aus einem röhrenförmigen einwandigen Mantel (40) gebildet sind, welcher zur Ausbildung zweier keine Unterbrechung des Zusammenhangs aufweisender U-förmiger Falze abgeplattet und zur Bildung des doppelwandigen Rohres so eingerollt ist, daß die beiden Falze miteinander zusammentreffen und durch die Rohrschweißnaht verbunden sind.

3. Rohr nach Anspruch 1, dadurch gekennzeichnet, daß die Innen- und Außenwand des Rohres außer in unmittelbarer Nähe der in dem Bereich der Rohrschweißnaht liegenden Falze (26, 27, 36, 37) aus verschiedenen Materialien ausgeführt sind.

4. Rohr nach irgendeinem der Ansprüche 1, 2 und 3, dadurch gekennzeichnet, daß ein Zwischenlagematerial (11, 41) in dem Raum zwischen den beiden Rohrwänden angeordnet ist.

5. Verfahren zur Herstellung eines geschweißten Rohres nach Anspruch 1, bei dem man durch Falzen eines Bandes (1) durch Umlegen zweier seitlicher gegenüberliegender Abschnitte (2, 3) dieses Bandes um 180° ein doppelwandiges Rohteil herstellt, dessen zwei freie, gegenüberliegende, parallele Ränder jeweils durch einen U-förmigen Falz (6, 7) aus dem die Wände umfassenden Material gebildet werden, diesem Rohteil die Form eines Rohres gibt und die beiden freien, parallelen, aneinandergrenzenden Ränder (6, 7) durch Schweißen zusammenfügt.

6. Herstellungsverfahren nach Anspruch 5, dadurch gekennzeichnet, daß die seitlichen Abschnitte (2, 3), einmal umgelegt, durch ein Spiel getrennt sind, welches beim Vorgang der Rohrbildung beseitigt wird.

7. Herstellungsverfahren nach Anspruch 5, dadurch gekennzeichnet, daß die zwei seitlichen umgelegten Abschnitte (22, 23 ; 32, 33) aus einem Material gebildet werden, welches von dem den mittleren Abschnitt (21, 31) des Bandes bildenden Material verschieden ist.

8. Herstellungsverfahren nach Anspruch 5, dadurch gekennzeichnet, daß man in dem Rohteil vor der Rohrbildung ein Zwischenlagematerial (11, 41) anordnet.

9. Herstellungsverfahren nach Anspruch 8, dadurch gekennzeichnet, daß das Zwischenlagematerial (11) angebracht wird, während die seitlichen Abschnitte (2, 3) mit dem mittleren Abschnitt (4) des Bandes einen Winkel im Bereich von 90° bilden.

10. Verfahren zur Herstellung eines geschweißten Rohres nach Anspruch 2, bei dem man durch Abplatten eines einwandigen Rohres (40) ein doppelwandiges Rohteil herstellt, dessen zwei freie, gegenüberliegende, parallele Ränder jeweils durch einen U-förmigen Falz aus dem die Wände bildenden Material gebildet werden, diesem Rohteil die Form eines Rohres gibt und die beiden freien, parallelen, aneinandergrenzenden Ränder durch Schweißen zusammenfügt.

11. Verfahren zur Herstellung nach Anspruch 10, dadurch gekennzeichnet, daß man vor dem Abplatten des Rohres (40) in diesem ein Zwischenlagenelement (41) anbringt, dessen Breite ungefähr gleich der Hälfte der Umfangslänge des Ausgangsrohrs (40) ist.

12. Verfahren zur Herstellung nach irgendeinem der Ansprüche 5 bis 11, dadurch gekennzeichnet, daß die Außenflächen der Falze (6, 7) vor dem Schweißen beispielsweise durch Schrappen oder Glattwalzen bearbeitet werden.

FIG.1

FIG.2

FIG.3

FIG.4

## FIG.5

## FIG.6

## FIG.7

## FIG.8

## FIG.9

## FIG.10

40

41

40    41

## FIG.11

40

41

## FIG.12